# EUROPÄISCHE PATENTSCHRIFT

(11) **EP 1 111 882 B1**
(45) Veröffentlichungstag und Bekanntmachung des Hinweises auf die Patenterteilung: **14.06.2006**
(21) Anmeldenummer: 00123594.4
(22) Anmeldetag: 28.10.2000
(51) Int. Cl.: H04M 1/725, H04N 7/14

(54) **Mobiltelefon mit erweiterter Funktionalität**
Mobile telephone with extended functionality
Téléphone mobile à fonctionalité étendue

(30) Priorität: 21.12.1999 DE 19961575
(43) Veröffentlichungstag der Anmeldung: 27.06.2001
(73) Patentinhaber: ROBERT BOSCH GMBH, 70442 Stuttgart (DE)
(72) Erfinder: Hasemann, Joerg-Michael, 27321 Thedinghausen (DE)

(56) Entgegenhaltungen:
- EP-A- 0 763 939
- EP-A- 0 804 030
- DE-A- 19 737 355
- US-A- 5 999 602
- PATENT ABSTRACTS OF JAPAN vol. 1997, no. 10, 31. Oktober 1997 (1997-10-31) & JP 09 172504 A (J T:KK), 30. Juni 1997 (1997-06-30)

## Beschreibung

Die Erfindung betrifft ein Mobiltelefon mit erweiterter Funktionalität.

Derzeitige Mobiltelefone für zellulare Mobilfunksysteme unterstützen eine Vielzahl von Funktionen, beispielsweise ist heutzutage bei Mobilfunkgeräten mit höherer Funktionalität eine Datenübertragung an einen Rechner bzw. ein Notebook möglich, wobei bei hochpreisigen Mobilfunkgeräten das Interface bereits im Gerät integriert ist. Ferner umfassen heutige hochfunktionelle Mobiltelefone im allgemeinen eine optische Schnittstelle, d.h. Infrarotschnittstelle.

Damit ist beispielsweise die Ausgabe oder das Versenden von Faxdaten etc. möglich.

In Zukunft werden bei neu vorgeschlagenen Mobilfunknetzen die Datenraten erhöht werden, so daß eine Übertragung von wesentlich höheren Datenraten möglich sein wird.

Die DE 197 37 355 A1 zeigt ein schnurloses Kommunikationsendgerät mit einer Videoschnittstelle zur Übertragung von Video-/ und Audio-Informationen.

Der Erfindung liegt daher die Aufgabe zugrunde, ein Mobiltelefon mit einer erweiterten Funktionalität zu schaffen, das hohe Datenraten verarbeiten kann.

Die Aufgabe wird durch ein Mobiltelefon mit den Merkmalen des Anspruchs 1 gelöst. Bevorzugte Ausgestaltungen der Erfindung sind Gegenstand der Unteransprüche.

Die vorliegende Erfindung betrifft ein Mobiltelefon eines zellularen Telekommunikationssystems mit mindestens einer Basisstation und einer Mobilstation, wobei das Mobiltelefon eine Audio-/Videoschnittstelle, eine Audioschnittstelle oder eine Videoschnittstelle aufweist, und im Fall einer Audio-/Videoschnittstelle vorzugsweise ein gemeinsamer Audio-/Videoanschlußstecker verwendet wird.

Ferner kann die Audiosignalschnittstelle einen separaten Mikrophoneingang und einen separaten Lautsprecherausgang aufweisen.

Weiterhin weist die Videoschnittstelle eine Vorrichtung zur Ausgabe eines Videosignals mit einen Pixeltaktgeber und einen Videospeicher in Form eines Video-RAM (RAM = Random Access Memory) zur Ausgabe eines Videobildes sowie einen Bildgenerator auf. Im Zusammenwirken mit dem Bildgenerator wird aus der im Video-RAM gespeicherten Bitmap eines darzustellenden Videobildes zusammen mit dem Signal des Pixeltaktgebers ein Videoausgangssignal erzeugt.

Vorzugsweise weist die Videoschnittstelle eine Vorrichtung zur Eingabe eines Videosignals in das Mobiltelefon umfassend einen Generator zur Erzeugung eines Sync-Signals, einen Analog-/Digitalwandler sowie ein weiteres Video-RAM zum Speichern der erzeugten Bitmaps des eingegebenen Videobildes auf.

Als Videosignale kommen PAL (Phase Alternation Line), NTSC (National Telvision System) oder VGA kompatible Signale in Betracht.

Erfindungsgemäß wird ein Audio-/Videoanschluß in einem Mobiltelefon integriert. Dadurch besteht die Möglichkeit, Audio-/Videosignale auf externe Geräte, wie beispielsweise Videorekorder, Walkmen oder Fernseher usw., zu übertragen. Dazu enthält das Mobiltelefon eine Vorrichtung zur Erzeugung eines Videosignals.

Die folgenden vorteilhaften Anwendungen sind daher möglich:
- Man kann einen Walkman/Diktiergerät zum Aufzeichnen oder Abspielen von Nachrichten an das Mobiltelefon anschließen,
- es ist möglich, einen PC (Personal Computer) mit Soundkarte als Anrufbeantworter einzusetzen, was einen zusätzlichen Signalisierungsaufwand über eine andere Schnittstelle, beispielsweise die serielle/Infrarotschnittstelle möglich ist,
- zur Aufzeichnung von Multimedia-Inhalten kann an das Mobiltelefon ein Videorekorder angeschlossen werden, was insbesondere bei Mobiltelefonen der dritten Generation, Stichwort UMTS (Universal Mobile Telefon System), möglich sein sollte,
- es kann ein handelsübliches Pocket-Fernsehgerät angeschlossen werden, wobei man die Möglichkeit eines Internet-/Intranetwebzuganges hat, ohne daß ein hochauflösendes LCD-Display (Liquid Crystal Display) in das Mobiltelefon integriert werden muß. Als Eingabe würde in diesem Anwendungsfall, nämlich Zugriff auf das Internet, die Tastatur des Telefons und/oder ein im Mobiltelefon integrierte Anzeigevorrichtung dienen können.
- das Einspielen von Videosequenzen und/oder Multimedia-Inhalten ist möglich, wobei zusammen mit einer Videokamera und einem Pocket-TV (Television) mittels des Mobiltelefons ein Videokonferenzsystem ermöglicht würde. Eine weitere Anwendung wäre eine Videofernüberwachung mittels des erfindungsgemäßen Mobiltelefons.

Bevorzugte Ausführungsformen der Erfindung werden nachfolgend anhand der Zeichnungen näher erläutert werden.
Fig. 1 zeigt eine Schemadarstellung eines Mobiltelefons;
Fig. 2 zeigt schematisch den Aufbau eines üblichen Mobiltelefons; und
Fig. 3 zeigt ein vereinfachtes Blockschaltbild eines Mobiltelefons mit der zusätzlichen Video-/Audioschnittstelle.

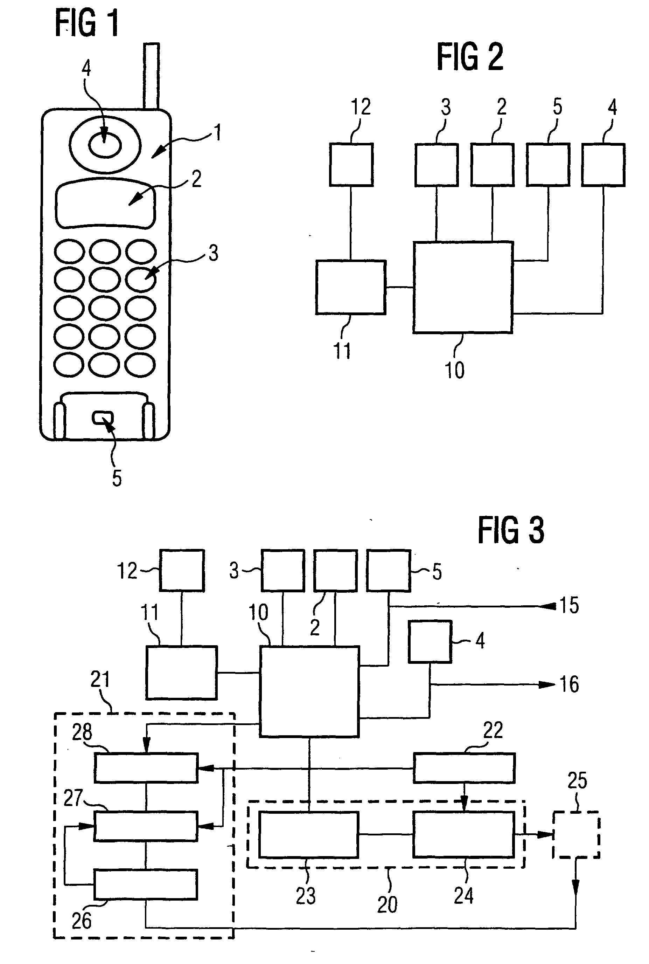

Fig. 1 zeigt die schematische Darstellung eines Mobiltelefons 1 mit einer LCD-Anzeige 2, einer Tastatur 3, einem Lautsprecher 4 sowie einem Mikrophon 5.

Fig. 2 zeigt den schematischen Aufbau eines Mobiltelefons 1, dessen zentraler Teil eine Recheneinheit 10 ist, die beispielsweise von einem Mikroprozessor oder einem digitalen Signalprozessor gebildet werden kann. Die Recheneinheit 10 ist über eine HF-Einheit 11 (Hochfrequenz) mit einer Antenne 12 verbunden, so daß Funksignale empfangen und gesendet werden können. Ferner ist die Tastatur 3, die LCD-Anzeige 2 und Mikrophon 5 sowie der Lautsprecher 4 an die Recheneinheit 10 angeschlossen.

Fig. 3 zeigt eine Schemaschaltung eines um die Audio-/Videoschnittstelle erweiterten Mobiltelefons 1. Auch hier besteht der wesentliche Teil des Mobiltelefons 1 aus der Recheneinheit 10 mit der daran angeschlossenen HF-Einheit 11 mit Antenne 12, Tastatur 3, LCD-Anzeige 2, Mikrophon 5 sowie Lautsprecher 4. Zum Ein- und Ausgeben eines Audiosignales muß daher lediglich eine Abzweigung zur Zuführung zum Mikrophon 5 sowie Lautsprecher 4 vorgesehen werden, so daß ein Audiosignaleingang 15 und ein Audiosignalausgang 16 verwirklicht wird.

Die Videoschnittstelle der Audio-/Videoschnittstelle des Mobiltelefons 1 besteht aus zwei Komponenten, und zwar aus einer Videoausgangskomponente 20 sowie einer Videoeingangskomponente 21, die unabhängig voneinander im Mobiltelefon 1 realisiert sein können. Zur Steuerung beider Eingangs-/Ausgangskomponenten ist ein Pixeltaktgeber 22 notwendig. Die Videoausgangskomponente 20 weist ein Video-RAM 23 sowie einen nachfolgenden Bildgenerator 24 auf, wobei das vom Bildgenerator 24 erzeugte Videosignal auf den Videostecker 25 gelegt wird. Die Funktionsweise ist wie folgt: eine von der Antenne 12 empfangene digitale Videoinformation wird über HF-Einheit 11 auf die Recheneinheit 10 gegeben, die die digitalen Videopixelwerte in das Video-RAM 23 zur Bildung der Bitmap eines Videobildes eingibt. Mittels des Pixeltaktgebers 22 und des Bildgenerator 24 wird aus dem im Video-RAM 23 abgelegten Bitmap ein analoges Videosignal erzeugt, das auf den Videostecker 25 gegeben wird.

Die Videoeingangskomponente 21 ist ebenfalls mit dem Videostecker 25 verbunden, über den ein analoges Videosignal in die Videoeingangskomponente 21 gegeben wird. Ein Generator 26 zur Erzeugung eines Synchronsignals erzeugt aus dem eingegebenen analogen Videosignal ein Synchronisationssignal, das einen nachfolgenden A/D-Wandler 27 (A/D: Analog/Digital) steuert. Die von dem A/D-Wandler erzeugten digitalen Pixelwerte werden unter Verwendung des Pixeltaktgebers 22 in einem Video-RAM 28 zur Erzeugung der Bitmap eines Videobildes abgespeichert. Das Video-RAM 28 bzw. Bildspeicher ist mit der Recheneinheit 10 zur weiteren Verarbeitung der digitalen Videopixeldaten verbunden, die dann über die Antenne 12 übertragen werden.

Wie bereits oben erwähnt wurde, können u.a. mit dem Videostecker 25 ein Camcorder, ein Videorecorder, ein PC, ein Fernseher, etc. verbunden werden. D.h. es können Komponenten, die analoge Videosignale erzeugen oder verarbeiten, mit dem Videostecker 25 verbunden werden.

In einer bevorzugten Ausführungsform wird sowohl für die Eingabe eines Videobildes als auch für seine Ausgabe ein gemeinsames Video-RAM verwendet. In diesem Fall ist natürlich eine gleichzeitige Bearbeitung von Videobildern sowohl in der Eingabe- als auch in der Ausgaberichtung nicht möglich, sondern es können nur entweder Videobilder eingegeben oder ausgegeben werden, was üblicherweise ausreichend ist.

## Patentansprüche

1. Mobiltelefon eines drahtlosen zellularen Telekommunikationssystems mit mindestens einer Basisstation und einer Mobilstation, wobei das Mobiltelefon eine Audio-/Videoschnittstelle (10, 20, 21) oder eine Videoschnittstelle (20, 21) aufweist, **dadurch gekennzeichnet, dass** das Mobiltelefon eine Videoeingangskomponente und eine Videoausgangskomponente aufweist, die eine gleichzeitige Bearbeitung von Audio-/Videosignalen sowohl in der Eingabe- als auch in der Ausgaberichtung ermöglichen, wobei die Videoeingangskomponente und die Videoausgangskomponente zwei voneinander unabhängige Videospeicher (23, 28) aufweisen.

2. Mobiltelefon nach Anspruch 1, **dadurch gekennzeichnet, daß** die Audio-/Videoschnittstelle (10, 20, 21) einen Audio-/Videoanschlußstecker (15, 16, 25) aufweist.

3. Mobiltelefon nach einem der Ansprüche 1 - 2, **dadurch gekennzeichnet, daß** die Audio-/Videoschnittstelle (10, 20, 21) oder Videoschnittstelle (20, 21) einen Pixeltaktgeber (22) aufweist.

4. Mobiltelefon nach Anspruch 3, **dadurch gekennzeichnet, daß** die Audio-/Videoschnittstelle (10, 20, 21) oder Videoschnittstelle (20, 21) eine Vorrichtung (20) zur Generierung und Ausgabe eines Videosignals aufweist.

5. Mobiltelefon nach Anspruch 4, **dadurch gekennzeichnet, daß** die Vorrichtung (20) zur Generierung und Ausgabe eines Videobildes ein Video-RAM (23) aufweist.

6. Mobiltelefon nach Anspruch 5, **dadurch gekennzeichnet, daß** die Vorrichtung (20) zur Generierung und Ausgabe eines Videosignals einen Bildgenerator (24) aufweist, der aus der im Video-RAM (23) gespeicherten Bitmap eines darzustellenden Videobildes mit dem Signal des Pixeltaktgebers (22) ein Videoausgangssignal erzeugt.

7. Mobiltelefon nach Anspruch 3, **dadurch gekennzeichnet, daß** die Audio-/Videoschnittstelle (10, 20, 21) bzw. Videoschnittstelle (20, 21) eine Vorrichtung (21) zur Eingabe eines Videosignals in das Mobiltelefon aufweist.

8. Mobiltelefon nach Anspruch 7, **dadurch gekennzeichnet, daß** die Vorrichtung (21) zur Eingabe eines Videosignals einen Generator (26) zur Erzeugung eines Sync-Signals, einen Analog /Digitalwandler (27) und ein Video-RAM (28) zum Speichern der erzeugten Bitmaps des eingegebenen Videobildes aufweist.

9. Mobiltelefon nach einem der vorangegangenen Ansprüche, **dadurch gekennzeichnet, daß** das Videosignal PAL, NTSC bzw. VGA kompatibel ist.

## Claims

1. Mobile telephone in a wireless cellular telecommunications system having at least one base station and a mobile station, where the mobile telephone has an audio/video interface (10, 20, 21) or a video interface (20, 21), **characterized in that** the mobile telephone has a video input component and a video output component which allow simultaneous handling of audio/video signals both in the input direction and in the output direction, the video input component and the video output component having two video memories (23, 28) which are independent of one another.

2. Mobile telephone according to Claim 1, **characterized in that** the audio/video interface (10, 20, 21) has an audio/video connector (15, 16, 25).

3. Mobile telephone according to either of Claims 1 and 2, **characterized in that** the audio/video interface (10, 20, 21) or video interface (20, 21) has a pixel clock generator (22).

4. Mobile telephone according to Claim 3, **characterized in that** the audio/video interface (10, 20, 21) or video interface (20, 21) has an apparatus (20) for generating and outputting a video signal.

5. Mobile telephone according to Claim 4, **characterized in that** the apparatus (20) for generating and outputting a video picture has a video RAM (23).

6. Mobile telephone according to Claim 5, **characterized in that** the apparatus (20) for generating and outputting a video signal has a picture generator (24) which generates a video output signal from the bitmap, stored in the video RAM (23), of a video picture to be displayed using the signal from the pixel clock generator (22).

7. Mobile telephone according to Claim 3, **characterized in that** the audio/video interface (10, 20, 21) or video interface (20, 21) has an apparatus (21) for inputting a video signal into the mobile telephone.

8. Mobile telephone according to Claim 7, **characterized in that** the apparatus (21) for inputting a video signal has a generator (26) for generating a sync signal, an analogue/digital converter (27) and a video RAM (28) for storing the generated bitmaps of the input video picture.

9. Mobile telephone according to one of the preceding claims, **characterized in that** the video signal is compatible with PAL, NTSC and VGA.

## Revendications

1. Téléphone mobile d'un système de télécommunication cellulaire sans fil avec au moins une station de base et une station mobile,
le téléphone mobile présentant une interface audio/vidéo (10, 20, 21) ou une interface vidéo (21),
**caractérisé en ce que**
le téléphone mobile présente un composant d'entrée vidéo et un composant de sortie vidéo, qui permettent un traitement simultané de signaux audio/vidéo aussi bien dans le sens de l'entrée que dans le sens de la sortie, et le composant d'entrée vidéo et le composant de sortie vidéo présentent deux mémoires vidéo (23, 28) indépendantes l'une de l'autre.

2. Téléphone mobile selon la revendication 1,
**caractérisé en ce que**
l'interface audio/vidéo (10, 20, 21) présente une fiche de raccordement audio/vidéo (15, 16, 25).

3. Téléphone mobile selon l'une quelconque des revendications 1 ou 2,
**caractérisé en ce que**
l'interface audio/vidéo (10, 20, 21) ou l'interface vidéo (21) présente un synchroniseur de pixels (22).

4. Téléphone mobile selon la revendication 3,
**caractérisé en ce que**
l'interface audio/vidéo (10, 20, 21) ou l'interface vidéo (21) présente un dispositif (20) pour générer et émettre un signal vidéo.

5. Téléphone mobile selon la revendication 4,
**caractérisé en ce que**
le dispositif (20) pour générer et émettre un signal vidéo présente une mémoire vive vidéo (23).

6. Téléphone mobile selon la revendication 5,
**caractérisé en ce que**
le dispositif (20) pour générer et émettre un signal vidéo présente un générateur d'image (24), qui produit un signal de sortie vidéo à partir de l'image en mode point stockée dans la mémoire vive vidéo (23) d'une image vidéo à représenter avec le signal du synchroniseur de pixels (22).

7. Téléphone mobile selon la revendication 3,
**caractérisé en ce que**
l'interface audio/vidéo (10, 20, 21) ou l'interface vidéo (20, 21) présente un dispositif (21) pour entrer un signal vidéo dans le téléphone mobile.

8. Téléphone mobile selon la revendication 7,
**caractérisé en ce que**
le dispositif (21) pour entrer un signal vidéo présente un générateur (26) pour produire un signal de synchronisation, un convertisseur analogique-numérique (27) et une mémoire vive vidéo (28) pour stocker les images produites en mode point de l'image vidéo entrée.

9. Téléphone mobile selon l'une quelconque des revendications précédentes,
**caractérisé en ce que**
le signal vidéo est compatible PAL, NTSC ou VGA.
